# FASCICULE DE BREVET EUROPEEN

(11) **EP 1 535 037 B1**
(45) Date de publication et mention de la délivrance du brevet: **09.08.2006**
(21) Numéro de dépôt: 03760734.8
(22) Date de dépôt: 18.06.2003
(51) Int. Cl.: G01M 3/22, B64F 5/00, B64D 37/24

(54) **PROCEDE DE CONTROLE DE L'ETANCHEITE D'UN RESERVOIR D'UN AERONEF**
VERFAHREN ZUR STEUERUNG DER VERSIEGELUNG EINES TANKS AN EINEM FLUGZEUG
METHOD FOR CONTROLLING THE SEALING OF A TANK ON AN AIRCRAFT

(30) Priorité: 19.06.2002 FR 0207554
(43) Date de publication de la demande: 01.06.2005
(73) Titulaire: Helitest Ags Ima, 33700 Merignac (FR)
(72) Inventeur: DUMORTIER, Laurent, F-33760 Targon (FR); SAMENAYRE, Jacques, F-33200 Bordeaux (FR)
(74) Mandataire: Fantin, Laurent
(86) Numéro de dépôt international: PCT/FR2003/001852
(87) Numéro de publication internationale: WO 2004/001364

(56) Documents cités:
- GB-A- 2 331 152
- US-A- 3 809 898
- US-A- 4 745 797
- US-A- 4 976 136
- US-A- 5 117 876
- US-B1- 6 289 722

## Description

La présente invention concerne un procédé de contrôle de l'étanchéité d'un réservoir d'un aéronef et un dispositif associé pour équiper ces réservoirs.

On sait que les réservoirs d'avion sont principalement intégrés dans les ailes qui font elles-mêmes office de contenant.

En effet, les ailes sont constituées de structures qui laissent un volume intérieur fermé très important. Des cordons de mastics techniques assurent l'étanchéité sur toutes les lignes de jointure entre les plaques de couverture de la structure pour rendre ce volume intérieur étanche.

Ces cordons de mastics techniques permettent de supporter les variations de températures et surtout offrent une élasticité qui accepte les déformations de cette structure lorsqu'elle est soumise aux contraintes de vol.

Les réservoirs ainsi constitués sont généralement munis de séparations pour réaliser des compartiments indépendants.

Le remplissage ou la vidange des réservoirs s'effectue par l'intermédiaire d'une ou plusieurs prises d'avitaillement, auxquelles on connecte un adaptateur appelé "accrocheur ou coupling", relié au réseau d'alimentation en carburant (citerne, cuves,...). Ces prises d'avitaillement sont standards et communes à tous les types d'aéronefs. Elles se situent généralement à l'intrados des voilures.

Dans les avions, ces réservoirs sont équipés de purges en points bas de chaque aile, un pour chaque compartiment lorsqu'il y en a. Ces purges sont schématiquement des clapets qui, lorsqu'ils sont pressés, laissent s'écouler le fluide contenu dans ledit réservoir. Ces purges ont essentiellement comme application, l'écoulement de l'eau de condensation accumulée dans les réservoirs.

L'eau étant plus dense que le carburant, elle s'accumule en point bas et c'est elle qui s'écoule en premier lors des purges. Elles servent également à drainer les réservoirs lors des opérations de maintenance nécessitant une ouverture des réservoirs afin d'y accéder.

Par ailleurs, dans le cas des avions civils, ces réservoirs sont mis à l'air libre pour assurer un équilibrage des pressions internes quelle que soit l'altitude de vol.

On entend par avions civils, les avions de transport qui utilise une technologie civile, quel que soit l'exploitant, qu'il soit civil ou militaire. On entend par avion militaire, les avions de chasse dont la technologie est purement militaire et dont les contraintes sont spécifiques.

Cet équilibrage de pression est obtenu par une mise à l'air libre à travers une ouverture débouchante.

Afin de ne pas perturber l'écoulement de l'air sur les surfaces ailaires, la prise d'air est du type Naca.

Le contrôle des réservoirs est réalisé en cas de détection de fuite sérieuse mais aussi à l'occasion des opérations de maintenance programmée.

En effet, l'agencement avec des cordons de mastic est une solution très intéressante techniquement mais elle engendre une détection délicate des origines de fuite. Un écoulement visualisé en un lieu ne conduit pas systématiquement à la présence d'une fuite au droit de ce lieu de visualisation. Le carburant peut tout à fait courir le long des structures sans permettre de localiser aisément le point d'origine de fuite et donc le cordon défectueux.

Une technique a été mise au point pour permettre de détecter avec précision ces fuites. Il s'agit d'un dispositif qui utilise de l'hélium comme gaz de détection ou de traçage et une sonde d'une très grande sensibilité capable de détecter quelques molécules de ce gaz. Ce gaz est constitué par nature de molécules de très petites tailles, ce qui facilite sa circulation et son passage même à travers les ouvertures les plus infimes.

De plus, il a une bonne tendance à se répandre dans un volume donné même s'il n'y a pas de circulation forcée et il ne présente aucun risque d'explosion ou d'inflammabilité.

Lors des opérations de maintenance sur l'avion, les réservoirs sont entièrement vidés et ventilés, l'avion est mis sur vérins et toutes les autres interventions sur l'avion sont réalisées en temps masqué.

En ce qui concerne les réservoirs, les fuites sont détectées en plaçant des vessies sur les zones externes supposées fuyantes. Ces vessies sont étanches et forment une chambre d'injection, reliée à une source d'hélium. Celui-ci diffuse à travers la fuite éventuelle et un opérateur, ayant pénétré dans le réservoir à travers un trou d' homme, déplace sa sonde le long des joints de mastic technique jusqu'à détecter le lieu exact de pénétration de l'hélium dans le réservoir provenant de la vessie, à travers la fuite.

Le joint de mastic est retiré et un nouveau joint est mis en place.

Une fois les réservoirs réparés et les autres interventions effectuées, l'aéronef est remis en service le plus rapidement possible car toute journée non exploitée coûte très cher à l'exploitant.

L'avion est donc remis sur roues et les pleins en carburant sont effectués.

Il arrive alors que des fuites non détectées apparaissent.

Cette situation n'est pas admissible car elle conduit obligatoirement à un prolongement de l'immobilisation de l'avion avec de graves conséquences financières mais aussi techniques. Il faut de nouveau vidanger les réservoirs, les ventiler et opérer comme précédemment pour détecter la fuite résiduelle.

Toutes ces manipulations de carburant, conduisent à la mise en place de procédures contraignantes de sécurité vis à vis des risques d'incendie, d'explosion, mais également de pollution de l'environnement. De plus, il est bien connu que l'environnement carburant des réservoirs est un milieu favorable de développement de micro-organismes sur les mastics, et donc générateur de pollution des carburants en les rendant impropres à la consommation aéronautique compte tenu des exigences qualités. La reprise temporaire du carburant est délicate. Il y a donc lieu d'aller vers des méthodes propres de contrôle global des réservoirs pour que l'avion soit en conformité de façon certaine en sortie de maintenance

D'autre part, il est un problème très spécifique à l'aviation, celui des procédures. En effet, lorsque l'avion est en configuration de vol, c'est à dire quand aucun élément ou sous-ensemble remettant en cause sa navigabilité n'est retiré ou manquant, il est interdit de démonter certains éléments, indépendamment du respect de la procédure complète. Le démontage des trous d'homme par exemple n'est plus possible sauf à respecter toutes les étapes de la procédure complète qui est nécessairement lourde.

Il conviendrait de disposer d'un contrôle technique intégral des réservoirs, en configuration de vol, avant le remplissage des réservoirs et avant la remise en service de l'avion, plus particulièrement avant de refaire les pleins.

De plus, comme indiqué précédemment, aucune pièce ne doit être démontée ou remplacée.

Dans le cas des avions de chasse, les réservoirs sont pressurisés, et les réservoirs sont généralement divisés en plusieurs parties indépendantes, ce qui complique l'architecture mais aussi les contrôles.

En effet, la vérification des fuites devient beaucoup plus complexe et la pénétration dans les réservoirs est plus délicate. Si, dans ce cas, les impératifs financiers sont moins cruciaux, la disponibilité est impérative si bien que les contraintes de maintenance et la détection des fuites éventuelles sont au moins aussi importantes que dans le cas des avions civils.

Une autre contrainte surgit car ces contrôles utilisent des gaz tels que l'hélium. Même si l'hélium en particulier est un gaz qui peut être approvisionné avec un coût raisonnable, les opérations de maintenance se trouvent régulièrement répétées et les réservoirs de certains avions sont de grandes dimensions, ce qui conduit à des consommations importantes de ces gaz de contrôle.

Il convient donc de déterminer un procédé qui permettent de réduire ces consommations tout en permettant des tests satisfaisants.

La présente invention propose un procédé de contrôle d'un réservoir d'un aéronef qui permet de tester ledit réservoir en configuration vol ainsi qu'un dispositif associé pour la mise en oeuvre de ce procédé.

L'invention est maintenant décrite en détail suivant un mode de réalisation particulier, non limitatif, en regard des dessins qui montrent :

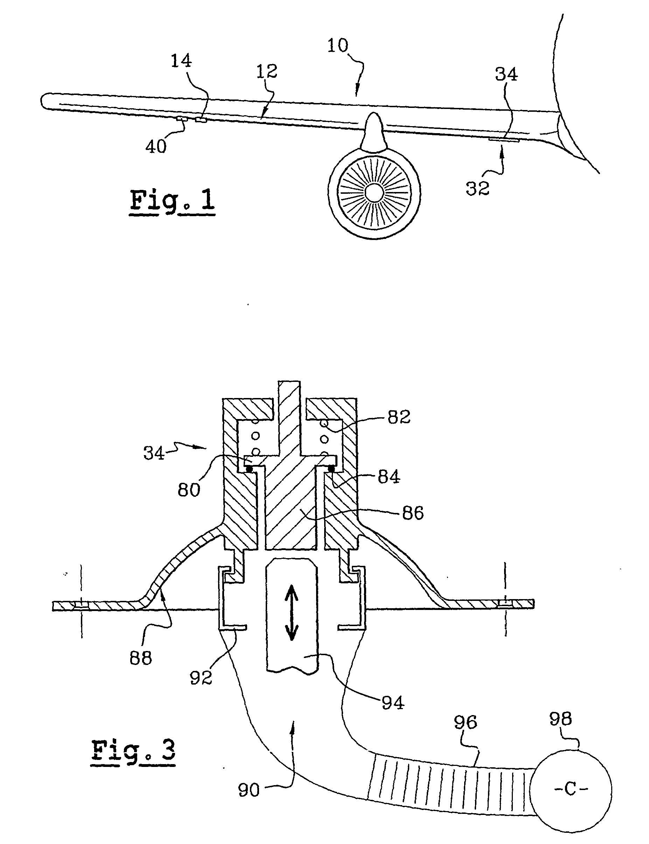

- figure 1, une vue d'une aile schématisée, en élévation avant,
- figure 2, une vue d'une prise d'avitaillement équipée de son adaptateur d'injection,
- figure 3, une vue schématique d'une prise de purge équipée de son instrumentation,
- figure 4, une vue d'un schéma des moyens d'injection,
- figure 5, une vue détaillée en perspective d'une prise d'air Naca ainsi que le dispositif selon la présente invention,
- figures 6A et 6B, deux vues en coupe médiane de la prise d'air de la figure 5, avec le dispositif avant et après mise en place, et
- figure 7, une vue de dessus de cette même prise d'air.

Une aile 10 d'aéronef, en l'occurrence dans un premier cas, un avion civil, est utilisée comme réservoir 12 de carburant et pour la simplification de la description, on considère que l'aile constitue un seul et unique réservoir. En effet, sur la plupart des aéronefs, le carburant est réparti dans différents réservoirs pour plusieurs raisons, notamment sécuritaires.

Une prise d'avitaillement, du type standard est également présente sur les ailes en communication avec l'intérieur de l'aile afin de remplir en carburant le réservoir 12 qui y est constitué.

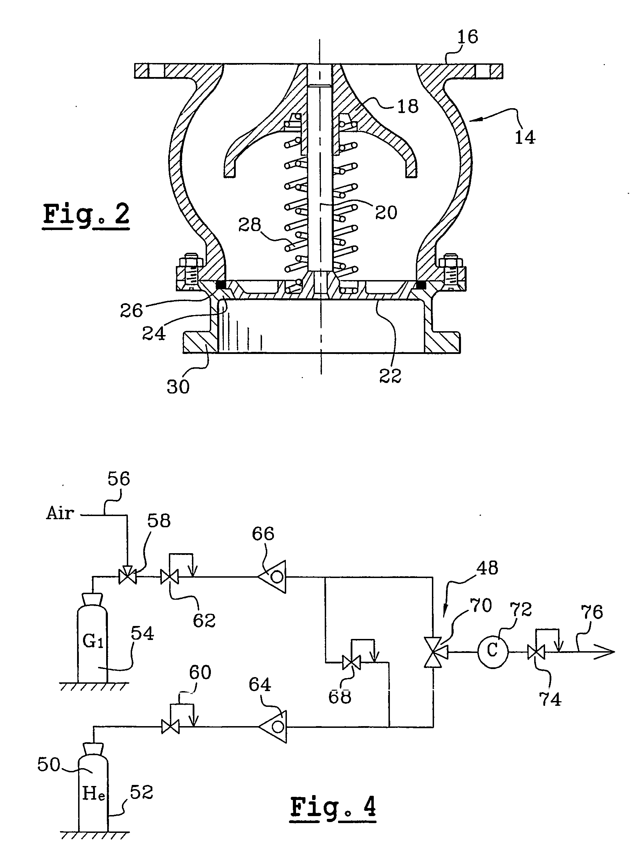

Cette prise d'avitaillement est représentée en détail sur la figure 2, suivant un mode standard de réalisation. Elle comprend un corps 14, solidaire du réservoir par son interface 16, moyennant des joints d'étanchéité adaptés, ceci de façon connue.

Un noyau 18 interne et en position centrée, assure le guidage de la tige 20 d'un clapet 22 mobile en translation.

Ce clapet est de forme tronconique et vient porter sur un siège 24 équipé d'un joint 26 d'étanchéité.

Un ressort 28 plaque ce clapet en permanence sur le joint pour assurer une fermeture étanche.

Cette prise d'avitaillement comprend en outre une bride de couplage 30, du type raccord pompier, prévue pour recevoir une prise d'avitaillement solidaire d'un tuyau d'alimentation en carburant.

En au moins un point bas 32, il est prévu une prise de purge 34 du réservoir. Cette prise de purge, figure 3, comprend de façon connue un clapet et une canne adaptée permet de manipuler ce clapet pour autoriser un écoulement de fluide à travers ce clapet. Les opérateurs peuvent ainsi évacuer régulièrement l'eau qui est généralement issue des phénomènes de condensation liés aux variations de températures. L'air pénétrant dans le réservoir en lieu et place du carburant consommé présente un certain taux d'hygrométrie. L'eau contenue se condense au cours de certaines étapes du vol, notamment durant les phases de changement d'altitude qui provoquent ces variations de températures.

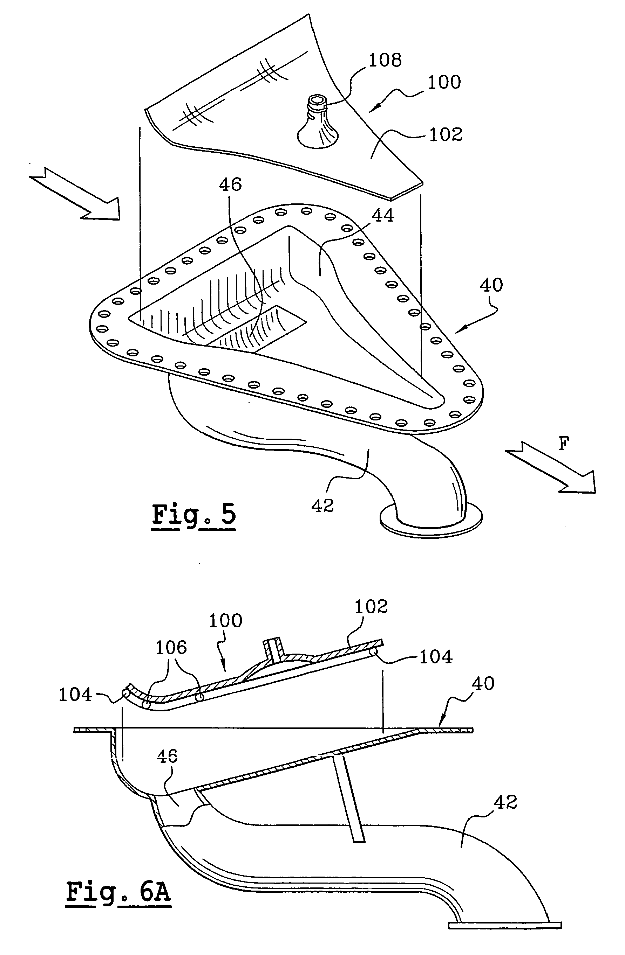

Une prise d'air 40 du type Naca, représentée sur la figure 5 notamment, est installée sur l'aile avec une conduite 42 également en communication avec l'intérieur du réservoir pour mettre en permanence l'intérieur de ce réservoir en équipression avec l'extérieur, étant rappelé qu'il s'agit d'un avion civil.

Cette prise d'air comprend un logement 44 de forme sensiblement triangulaire dans le plan de l'aile et mais également dans un plan perpendiculaire. Au fond du logement, à l'endroit de plus forte profondeur et de plus grande largeur, il est prévu une ouverture 46.

Cette ouverture est reliée par la conduite 42 au réservoir pour placer le volume intérieur en relation avec l'extérieur.

Cette prise d'air est bien connue et grandement utilisée sur les aéronefs car elle évite d'engendrer des perturbations des flux d'air circulant sur les ailes. Cette prise d'air conserve un écoulement laminaire sans créer de turbulences.

Ce qui est généralement une amélioration aérodynamique pour d'autres mobiles en déplacement devient une obligation en aéronautique.

Une fois le réservoir en configuration vol, on dispose du volume intérieur du réservoir vide à contrôler avec trois points d'accès :
- la prise 14 d'avitaillement carburant,
- la prise de purge 34, et
- l'ouverture 40 de la prise d'air Naca.

Le procédé de détection de fuite d'un réservoir vide selon l'invention consiste à mettre ledit réservoir en pression à l'aide d'un gaz de détection, en l'occurrence de l'hélium. Cette surpression P1 nécessaire est très faible, de l'ordre de 0,10 bars à 0,15 bars.

Par contre l'hélium doit être injecté en quantité suffisante pour atteindre de préférence en tout point du réservoir une concentration de 10 ppm à 20 ppm soit de l'ordre de 5% d'hélium par rapport à l'air.

Or, on se heurte à un problème qui est celui de la diffusion de l'hélium dans le réservoir car même si ce gaz possède un bon pouvoir de diffusion, les différentes membrures, les renforts, les passages de la structure sont autant d'obstacles qui ralentissent la diffusion.

La pression d'injection du gaz de détection se situe entre 0,5 bars et 3,0 bars, en fonction du type d'aéronef testé.

Pour injecter ce gaz, on dispose de moyens d'injection 48 spécifiques, ayant une fonction de mélangeur. Ces moyens comprennent une source 50 de gaz de détection, en l'occurrence de l'hélium He, généralement distribué en bouteille 52 et une source 54 de gaz vecteur, par exemple un gaz neutre moins cher comme le dioxyde d'azote NO₂ pour respecter le caractère inerte ou de l'air 56 issu du réseau d'air comprimé du hall de maintenance. Dans ce cas une vanne 58 trois voies permet de changer de source ou de prévoir un mélange des deux.

Des détendeurs 60, 62 permettent de régler avec précision la pression de sortie des gaz tandis que des vannes 64, 66 de débit autorisent un réglage du volume dispensé.

Il est prévu un équilibrage des pressions en 68 tandis qu'une vanne 70 trois voies assure la distribution en un point à travers un catharomètre 72. Une dernière électrovanne 74 de sécurité permet d'ajuster avec précision la pression d'injection du mélange. Ce mélange est ensuite distribué à travers un conduit 76 de sortie.

Le détecteur utilisé par l'opérateur durant ses contrôles de traces du gaz de détection, l'hélium dans l'exemple retenu, est avantageusement celui dénommé "HELITEST", commercialisé par la société "VARIAN S.P.A".

Un tel détecteur présente une sensibilité telle qu'il détecte une concentration d'hélium de 2 ppm.

Pour injecter le gaz de détection dans le réservoir, on connecte l'alimentation à l'un des deux points d'accès, dans le cas présent, c'est la prise d'avitaillement 14 qui est retenue.

Le conduit 76 de sortie du mélangeur est équipé d'une prise d'alimentation adaptée pour une connexion sur la bride de couplage 30 de la prise d'avitaillement.

Afin de pouvoir mesurer la concentration en hélium dans le réservoir et atteindre ainsi un seuil minimum, il est nécessaire de prévoir un point de prélèvement distant du point d'injection que constitue la prise d'avitaillement 14.

La prise de purge 34 est donc retenue à cet effet puisqu'elle est en place de façon permanente et qu'elle n'oblige à aucune ouverture ou modification de l'avion en configuration vol. Cette prise est utilisée régulièrement lors des phases de ravitaillement en carburant.

A cet effet, on place un adaptateur sur la prise de purge 34.

Cet adaptateur fait partie du dispositif selon la présente invention.

Un schéma de cet adaptateur est représenté sur la figure 3, de façon simplifiée, en sorte de présenter les fonctions des différents éléments.

Il convient de réaliser un adaptateur standard pouvant se monter sur chaque type de purge, cet adaptateur devant au moins remplir les fonctions indiquées ci-après.

La prise de purge 34 comprend un clapet 80 soumis à l'action d'un élément 82 de rappel tel qu'un ressort. Le clapet 80 comprend un joint 84 qui assure l'étanchéité quand le clapet est soumis à cet effort de rappel.

Un pion 86 solidaire du clapet est accessible de l'extérieur, dans une cavité 88.

En exerçant un effort sur ce pion, on soulève le clapet 80, à l'encontre de l'élément 82 de rappel, et on ouvre ledit clapet.

L'adaptateur 90 comprend des moyens 92 d'accrochage sur la prise de purge 34 existante, des moyens 94 de manoeuvre d'ouverture du clapet 80, un conduit 96 relié à un catharomètre 98 de mesure de la concentration en hélium.

On note que la prise de purge 34 ne demande aucune modification, seul l'adaptateur est réalisé pour convenir à la fonction recherchée.

Ainsi que cela sera expliqué ultérieurement lors de la description du fonctionnement, le réservoir subit une mise en pression et il y a lieu de vérifier de façon certaine cette mise en pression pour éviter toute augmentation susceptible d'endommager les structures.

Pour mesurer l'accroissement de pression dans le réservoir, il faut pouvoir y accéder. La prise de purge pourrait aussi être utilisée à cet effet mais dans le mode de réalisation retenu, c'est par le troisième point d'accès que cette mesure est réalisée à savoir la prise d'air 40, type Naca.

De toutes les façons, comme l'intérieur de l'aile doit être mis en légère pression, il faut nécessairement obturer cette prise d'air.

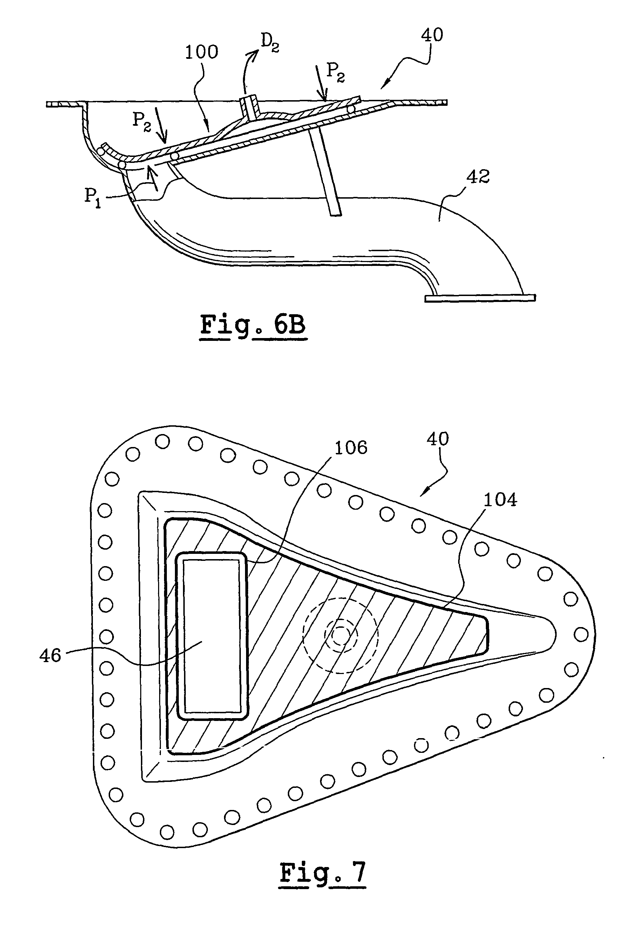

Ces moyens 100 d'obturation sont représentés en détail sur les figures 6A et 6B. Ces moyens comprennent une platine 102 de forme conjuguée de celle du fond de la prise d'air Naca.

Cette platine porte deux joints 104 et 106. Le premier joint 104 périphérique, visible sur la figure 7, suit sensiblement la forme extérieure du fond de cette prise d'air Naca.

Quant au second joint 106, il suit le contour de l'ouverture 46 située dans le fond de la prise d'air.

Ainsi entre les deux joints, une surface S est définie.

Un piquage 108 permet de se connecter au droit de cette surface S.

Ce piquage reçoit un connecteur sur une source de vide. Une telle source peut être un venturi branché sur la source d'air comprimé industriel disponible.

Cette source de vide génère une dépression D2.

Cette dépression D2 multipliée par la surface S sur laquelle elle s'exerce, conduit à une force résultante P2 qui a tendance à plaquer la platine contre le fond de la prise d'air.

La dépression D2 ainsi créée doit être de l'ordre de 0,7 bars à 0,8 bars maximum.

Par contre, la pression du gaz de détection, l'hélium, provoque sur la section de l'ouverture 46, une force résultante P1.

Il convient que la force résultante P1 soit inférieure à la force P2 pour que la platine reste en place et obture la prise d'air lorsque la platine est plaquée manuellement sur le fond de la prise d'air Naca, ainsi que montré sur la figure 6B.

Cet agencement permet d'obturer la prise d'air sans recourir à un démontage ou à une modification des pièces en place. On sait que lorsque l'aéronef est en configuration vol, il n'est pas possible d'intervenir.

L'obturateur de la prise d'air Naca permet également de faire un piquage de mesure de la pression du gaz dans le réservoir. Cette reprise de mesure permet de faire une lecture manuelle à l'aide d'un manomètre pour avoir une seconde source de vérification.

Selon un perfectionnement, cette seconde mesure peut aussi permettre d'asservir des moyens automatiques de remplissage, quand cette option est retenue.

La mise en oeuvre de l'agencement selon la présente invention est maintenant décrite.

Le moyens d'injection sont mis en service et une pression d'injection est programmée ainsi qu'une concentration en hélium. Les moyens de détection et de mesure sont connectés à la prise de purge et la platine est mise en place dans la prise d'air, manuellement.

La source de vide est mise en service et ladite platine est plaquée dans le fond de la prise d'air.

Le manomètre est en service.

Les moyens d'injection sont commandés pour injecter le mélange de gaz.

Le taux d'hélium injecté en mélange est de l'ordre de 10% et lorsque le catharomètre au point de purge indique une concentration de 5%, l'injection est stoppée.

En effet, cela veut dire que la concentration est comprise entre 5 et 10% au plus, ce qui permet d'affiner les mesures et d'économiser du gaz de détection.

En effet, si l'on injecte du gaz à 100% d'hélium, compte tenu de la diffusion retardée par les obstacles, lorsque la mesure au point de purge enregistre 5%, l'opérateur se retrouve avec un gradient important entre le point d'injection à 100% et le point de mesure à 5%, ce qui peut engendrer des disparités de détection en plus d'une consommation excessive de gaz.

De ce fait, le réservoir peut donc être maintenu sous légère pression avant de refaire les pleins pour un contrôle exhaustif final.

Il suffit ensuite pour l'opérateur de déplacer le détecteur d'hélium sur toute la surface concernée de l'aile formant réservoir.

Si une fuite du réservoir laisse échapper de l'hélium, même en très faible quantité, il est possible de le déterminer et donc de procéder aux interventions jugées nécessaires avant que l'aéronef n'ait quitté le lieu de maintenance et ne soit remis en service.

Cette opération pouvant être effectuée au plus tôt durant le cycle de maintenance de l'aéronef, on évite ainsi de façon quasi certaine le risque de prolongement de l'immobilisation pour cause de fuites carburant.

On note que sur les trois points d'accès, on pourrait intervertir les rôles des différents points : l'injection du gaz de détection au point de purge, le contrôle de pression au droit de la prise d'avitaillement et la détection de la concentration en gaz de détection au droit de la prise d'air.

Dans le cas d'un avion militaire, les réservoirs sont exempts de prises d'air Naca puisque les réservoirs sont en pression au cours du vol. Il faut donc qu'ils constituent des enceintes closes si bien que le problème de l'obturation des prises d'air ne se pose plus.

Par contre, ces réservoirs comprennent des prises de purge ayant les mêmes fonctionnalités ainsi que des prises d'avitaillement.

De plus, les réservoirs sont maintenus à des pressions différentes en fonction de leurs positions dans les ailes. Plus le réservoir concerné est éloigné du fuselage et donc des moteurs, plus la pression de fonctionnement est élevée.

Lors du contrôle de l'étanchéité des réservoirs, il faut donc pouvoir faire les tests avec une mise en pression au moins égale à la pression nominale de fonctionnement.

La mise en oeuvre est donc identique avec une adaptation de la pression du gaz de détection qui doit être ajustée à la valeur de consigne associée au réservoir concerné.

Le problème de la diffusion du gaz dans chaque réservoir est plus crucial car les obstacles sont encore plus nombreux dans ce type d'avion militaire que dans les avions civils. De plus, l'exiguïté des volumes est aussi une contrainte.

La détection une fois le réservoir mis en pression avec le gaz de détection, le contrôle s'effectue de la même façon que précédemment.

## Revendications

1. Procédé de contrôle d'un réservoir d'un aéronef en configuration vol, muni d'au moins une prise (14) d'avitaillement et d'au moins une prise (34) de purge, **caractérisé en ce qu'**il comprend les étapes suivantes :
- connecter une alimentation (76) en gaz de détection sur au moins une des prises (14) d'avitaillement ou de purge (34),
- connecter un adaptateur (90) pour la mesure de pression et/ou le contrôle de la concentration en gaz de détection sur au moins une des prises (34) de purge quand l'alimentation (76) est connectée sur une des prises (14) d'avitaillement ou sur une des prises (14) d'avitaillement lorsque l'alimentation (76) est connectée sur une des prises (34) de purge
- injecter dans le réservoir du gaz de détection sous pression P1, et
- détecter à la périphérie du réservoir la présence de gaz de détection issue d'une éventuelle fuite.

2. Procédé de contrôle d'un réservoir selon la revendication 1, **caractérisé en ce que** l'on injecte un mélange d'un gaz de détection et d'au moins un gaz vecteur.

3. Procédé de contrôle d'un réservoir selon la revendication 1 ou 2, **caractérisé en ce que**, dans le cas d'une présence de prises d'air (40) d'équilibrage de pressions associées audit réservoir, on obture chaque prise d'air (40) d'équilibrage de pressions au moyen d'un dispositif (100) d'obturation à dépression D2.

4. Procédé de contrôle d'un réservoir selon l'une quelconque des revendications précédentes, **caractérisé en ce que** l'on assure une dépression D2 telle que, multipliée par la section S sur laquelle elle s'exerce, elle génère une force P2 supérieure à la force résultant de la pression P1 du gaz de détection, multipliée par la section d'ouverture de la prise d'air.

5. Procédé de contrôle d'un réservoir selon l'une quelconque des revendications précédentes, **caractérisé en ce que** on utilise de l'hélium comme gaz de détection.

6. Dispositif pour la mise en oeuvre du procédé selon l'une quelconque des revendications 1 à 5, **caractérisé en ce qu'**il comprend des moyens d'injection qui comprennent une source (52) de gaz de détection et au moins une source (54,56) de gaz vecteur, des moyens (72) de contrôle de la concentration en gaz de détection et des moyens (74) de contrôle de la pression de sortie du mélange.

7. Dispositif selon la revendication 6, **caractérisé en ce que**, dans le cas de la présence d'une prise d'air (40), du type Naca, il comprend des moyens (100) obturateurs, composés d'une platine (102) épousant la forme de cette prise d'air (40) et munie d'au moins deux joints (104,106) déterminant au moins une surface S et d'un piquage (108) de connexion à une source de vide débouchant au droit de cette surface.

8. Dispositif selon la revendication 6 ou 7, **caractérisé en ce qu'**il comprend un adaptateur (90) de connexion sur une prise de purge (34), composé de moyens (92) d'accrochage sur la prise de purge (34) existante et au moins des moyens (98) de mesure de pression et/ou de concentration en gaz de détection.

9. Dispositif selon la revendication 6, 7 ou 8, **caractérisé en ce que** moyens (100) obturateurs de la prise d'air (40) sont équipés d'un piquage de mesure de la pression.

## Claims

1. A method of testing an aircraft tank in flight configuration, provided with at least one fuelling connection (14) and at least one drainage connection (34), **characterised in that** it comprises the following steps:
- connecting a detection gas supply (76) to at least one of the fuelling (14) or drainage (34) connections,
- connecting an adaptor (90) for measuring the pressure and/or monitoring the detection gas concentration to at least one of the drainage connections (34) when the supply (76) is connected to one of the fuelling connections (14) or to one of the fuelling connections (14) when the supply (76) is connected to one of the drainage connections (34),
- injecting detection gas into the tank at a pressure P1, and
- detecting, at the periphery of the tank, the presence of detection gas issuing from any leakage.

2. A method of testing a tank according to claim 1, **characterised in that** a mixture of a detection gas and at least one carrier gas is injected.

3. A method of testing a tank according to claim 1 or 2, **characterised in that**, in the case of the presence of pressure balancing air connections (40) associated with said tank, each pressure balancing air connection (40) is closed off by means of a closure device (100) at low pressure D2.

4. A method of testing a tank according to any one of the preceding claims, **characterised in that** a low pressure D2 is provided such that, multiplied by the cross section S on which it is exerted, it generates a force P2 greater than the force resulting from the pressure P1 of the detection gas, multiplied by the cross section of opening of the air connection.

5. A method of testing a tank according to any one of the preceding claims, **characterised in that** helium is used as a detection gas.

6. A device for implementing the method according to any one of claims 1 to 5, **characterised in that** it comprises injection means which comprise a detection gas source (52) and at least one carrier gas source (54, 56), means (72) of controlling the detection gas concentration and means (74) of controlling the discharge pressure of the mixture.

7. A device according to claim 6, **characterised in that**, in the case of the presence of an air connection (40), of the NACA type, it comprises closure means (100) composed of a plate (102) corresponding to the shape of this air connection (40) and provided with at least two seals (104, 106) determining at least one surface S and a tapping (108) for connection to a vacuum source emerging in line with this surface.

8. A device according to claim 6 or 7, **characterised in that** it comprises a connection adaptor (90) on a drainage connection (34) composed of means (92) of attachment to the existing drainage connection (34) and at least means (98) of measuring the pressure and/or concentration of detection gas.

9. A device according to claim 6, 7 or 8, **characterised in that** closure means (100) for the air connection (40) are equipped with a tapping for measuring the pressure.

## Patentansprüche

1. Verfahren zur Überprüfung des mit mindestens einem Einfüllstutzen (14) und mindestens einem Ablaufstutzen (34) versehenen Tanks eines flugbereiten Luftfahrzeugs, **dadurch gekennzeichnet, dass** es folgende Schritte umfasst:
- Anschließen einer Detektorgaszufuhr (76) an mindestens einen der Einfüll-(14) bzw. der Ablaufstutzen (34),
- Anschließen eines Adapters (90) zur Messung des Drucks und/oder zur Überprüfung der Detektorgaskonzentration an mindestens einen der Ablaufstutzen (34), wenn die Zufuhr (76) an einen der Einfüllstutzen (14) angeschlossen ist, oder an einen der Einfüllstutzen (14), wenn die Zufuhr (76) an einen der Ablaufstutzen (34) angeschlossen ist,
- Einspritzen des Detektorgases in den Tank mit einem Druck P1, und
- Erfassen von Detektorgas in der Tankumgebung infolge eines möglichen Lecks.

2. Verfahren zur Überprüfung eines Tanks nach Anspruch 1, **dadurch gekennzeichnet, dass** ein Gemisch aus einem Detektorgas und mindestens einem Trägergas eingespritzt wird.

3. Verfahren zur Überprüfung eines Tanks nach Anspruch 1 oder 2, **dadurch gekennzeichnet, dass** bei vorhandenen, dem Tank zugeordneten Lufteinlassstutzen (40) für den Druckausgleich jeder Lufteinlassstutzen (40) für den Druckausgleich mittels einer mit einem Unterdruck D2 beaufschlagten Verschlussvorrichtung (100) verschlossen wird.

4. Verfahren zur Überprüfung eines Tanks nach einem der vorstehenden Ansprüche, **dadurch gekennzeichnet, dass** ein Unterdruck D2 derart sichergestellt wird, dass er, multipliziert mit dem Querschnitt S, auf den er ausgeübt wird, eine Kraft P2 erzeugt, die größer ist, als die aus dem Druck P1 des Detektorgases resultierende Kraft, multipliziert mit dem Öffnungsquerschnitt des Lufteinlassstutzens.

5. Verfahren zur Überprüfung eines Tanks nach einem der vorstehenden Ansprüche, **dadurch gekennzeichnet, dass** als Detektorgas Helium verwendet wird.

6. Vorrichtung zum Durchführen des Verfahrens nach einem der Ansprüche 1 bis 5, **dadurch gekennzeichnet, dass** sie eine Detektorgasquelle (52) und mindestens eine Trägergasquelle (54, 56) umfassende Einspritzmittel, Mittel (72) zur Überprüfung der Detektorgaskonzentration und Mittel (74) zur Überprüfung des Drucks des austretenden Gemisches umfasst.

7. Vorrichtung nach Anspruch 6, **dadurch gekennzeichnet, dass** sie bei vorhandenem Lufteinlassstutzen (40) des Typs Naca, Verschlussmittel (100) umfasst, welche aus einer in der Form an diesen Lufteinlassstutzen (40) angepassten und mit mindestens zwei mindestens eine Fläche S bestimmenden Dichtungen (104, 106) versehenen Platte (102) und aus einem senkrecht zu dieser Fläche mündenden Anschluss (108) zum Anschließen einer Vakuumquelle zusammengesetzt sind.

8. Vorrichtung nach Anspruch 6 oder 7, **dadurch gekennzeichnet, dass** sie einen Einhängemittel (92) zum Einhängen an den vorhandenen Ablaufstutzen (34) umfassenden Adapter (90) zum Anschließen an einen Ablaufstutzen (34) und mindestens Messmittel (98) zum Messen des Drucks und/oder der Konzentration des Detektorgases umfasst.

9. Vorrichtung nach Anspruch 6, 7 oder 8, **dadurch gekennzeichnet, dass** die Verschlussmittel (100) zum Verschließen des Lufteinlassstutzens (40) mit einem Druckmessanschluss ausgestattet sind.
